(19) Europäisches Patentamt
European Patent Office
Office européen des brevets

(11) **EP 1 819 984 B1**

(12) **FASCICULE DE BREVET EUROPEEN**

(45) Date de publication et mention
de la délivrance du brevet:
**12.02.2014 Bulletin 2014/07**

(21) Numéro de dépôt: **05813387.7**

(22) Date de dépôt: **07.12.2005**

(51) Int Cl.:
**G01C 21/16** (2006.01)          **G01C 25/00** (2006.01)

(86) Numéro de dépôt international:
**PCT/EP2005/056578**

(87) Numéro de publication internationale:
**WO 2006/061403 (15.06.2006 Gazette 2006/24)**

(54) **SYSTEME DE NAVIGATION INERTIELLE HYBRIDE BASE SUR UN MODELE CINEMATIQUE**

HYBRIDES TRÄGHEITSNAVIGATIONSSYSTEM AUF DER BASIS EINES KINEMATISCHEN
MODELLS

HYBRID INERTIAL NAVIGATION SYSTEM BASED ON A KINEMATIC MODEL

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **07.12.2004 FR 0413040**

(43) Date de publication de la demande:
**22.08.2007 Bulletin 2007/34**

(73) Titulaire: **SAGEM DEFENSE SECURITE
75015 Paris (FR)**

(72) Inventeur: **DEBAILLEUL, Frédéric
F-78150 LE CHESNAY (FR)**

(74) Mandataire: **Regimbeau
20, rue de Chazelles
75847 Paris Cedex 17 (FR)**

(56) Documents cités:
• **DISSANAYAKE G ET AL: "THE AIDING OF A LOW-
COST STRAPDOWN INERTIAL MEASUREMENT
UNIT USING VEHICLE MODEL CONSTRAINTS
FOR LAND VEHICLE APPLICATIONS" IEEE
TRANSACTIONS ON ROBOTICS AND
AUTOMATION, IEEE INC, NEW YORK, US, vol. 17,
no. 5, octobre 2001 (2001-10), pages 731-747,
XP002909559 ISSN: 1042-296X cité dans la
demande**
• **HINÜBER D V ET AL: "LEISTUNGSPOTENTIAL
MODERNER INERTIALER MESSSYSTEME" ATZ
AUTOMOBILTECHNISCHE ZEITSCHRIFT,
FRANCKH., STUTTGART, DE, vol. 97, no. 1,
janvier 1995 (1995-01), pages 30-35, XP000486417
ISSN: 0001-2785**

**Description**

La présente invention concerne d'une façon générale la navigation inertielle INS (acronyme de l'expression anglo-saxonne « Inertial Navigation System ») dans un porteur.

Plus précisément, l'invention concerne un procédé destiné à la détermination de paramètres de navigation inertielle d'un porteur se déplaçant suivant des composantes cinématiques de déplacement modélisables, le procédé comportant une étape de mesures inertielles lesquelles peuvent comprendre une erreur dite d'inertie qui conduit à déterminer de façon inexacte lesdits paramètres.

Des procédés de ce type sont déjà connus.

On les utilise notamment pour obtenir une position du porteur sur lequel le système de navigation inertiel est embarqué.

A cet égard, ces systèmes permettent aujourd'hui d'obtenir des performances satisfaisantes en terme de précision.

Par exemple, on est capable d'obtenir une précision de position en inertie pure de l'ordre de 1Nm/h.

Cependant, pour obtenir une précision plus importante (décamétrique ou métrique par exemple), on utilise une information externe.

Pour ce faire, on commence par mettre en oeuvre des mesures inertielles pour estimer une position du porteur, puis, afin de corriger d'éventuelles erreurs sur cette estimation, on utilise ladite information externe, celle-ci étant fournie par un autre système.

De tels systèmes de navigation sont ainsi couramment désignés par les termes « systèmes hybrides ».

A titre d'exemple, on connaît des systèmes de ce type dont ladite correction est mise en oeuvre à l'aide de données venant d'un système GPS (information externe).

Un avantage ici est que cette information externe renseigne directement sur les coordonnées du porteur dans un repère prédéfini.

Cependant, un problème connu est que les systèmes GPS ne sont pas exempts d'attaques possibles de brouillage.

Dans ce cas, le système de navigation inertielle ne peut plus compter sur les informations GPS pour se recaler sur la bonne position.

En outre, il arrive que l'accès aux informations GPS soit rendu difficile dans certaines zones sur le parcours du porteur.

Et de nouveau, le système inertiel ne dispose plus de moyens pour se recaler sur la bonne position ou en d'autre terme corriger les erreurs de positionnement induites au cours du temps au niveau des capteurs inertiels.

La performance du système de navigation utilisant le GPS est alors limitée à la performance obtenue en inertie pure, ce qui demeure pénalisant.

Bien entendu, on connaît des solutions pour remédier à cet inconvénient.

Par exemple, dans le cas d'un porteur du type véhicule automobile, l'information externe peut provenir d'un odomètre sur lequel il est fixé.

On utilise alors la mesure fiable de la distance parcourue par le véhicule pour corriger les positionnements déduits des mesures inertielles.

Bien qu'un système de ce type réponde dans une certaine mesure aux problèmes posés, notamment pour des véhicules automobiles, il n'en demeure pas moins que son intégration ne soit pas dépourvue de difficulté.

Premièrement, l'adaptation du système au véhicule pose souvent des problèmes, notamment en ce qui concerne une bonne réception du signal émis par l'odomètre. Une telle qualité de réception nécessite par exemple des efforts de conception au niveau des circuits électroniques étant donné la diversité de forme que peuvent avoir les signaux.

Deuxièmement, du fait de contraintes d'environnement (déformation du terrain, montée, descente etc.), le porteur est amené à se déformer dans les directions de l'espace.

Par exemple si on considère une composante de déplacement parallèle à la direction de marche du véhicule, celui-ci peut se déformer selon cette composante (suspensions sollicitées, etc.), ce qui induit une détérioration de la pertinence de la comparaison des mesures odométriques aux mesures inertielles intégrées.

Il existe ainsi d'autres solutions qui permettent d'obtenir une bonne performance de positionnement en l'absence de système GPS ou d'odomètre.

Par exemple, une autre solution, connue sous l'acronyme « ZUPT » pour « Zero Update » consiste à arrêter périodiquement le porteur de façon à ce que les vitesses dans des axes de l'espace soient nulles et utiliser cette information.

Cette solution est souvent désignée par l'expression « hybrider à vitesse nulle ».

En procédant de la sorte, le système de navigation inertiel est capable d'estimer les erreurs induites par les capteurs et d'améliorer ainsi la performance notamment de position.

Il existe toutefois des limites à une telle solution.

Typiquement, ces arrêts périodiques (toutes les 4 à 10 minutes selon la performance désirée) imposent parfois des contraintes opérationnelles fortes.

Par exemple, dans le cas d'un porteur militaire en phase de combat char, hélicoptère, ou autre), il peut être délicat de s'arrêter pour mettre en oeuvre une hybridation à vitesse nulle.

On connaît un système de navigation inertiel d'un porteur qui permet de s'affranchir dans une certaine mesure des informations externes [2].

A cet effet, le système met en oeuvre un procédé qui réduit les erreurs d'inertie de la centrale.

Plus précisément, le procédé comporte une étape où l'on choisit deux composantes de vitesse selon les axes transverse et vertical du véhicule.

Ces composantes sont supposées nulles et sont utilisées comme observation d'un filtre de Kalman.

Un problème de ce procédé est qu'il offre de meilleures performances en termes de précision uniquement dans des conditions de roulement particulières (une vitesse du porteur constante et un terrain plat, notamment).

Ainsi, à titre d'exemple non limitatif, le procédé n'est plus précis dès lors que le porteur vire, monte et/ou descend.

Un but de la présente invention est de s'affranchir dans une certaine mesure des inconvénients présentés ci-dessus.

Notamment, un but de la présente invention est de pouvoir obtenir des performances en terme de positionnement bien meilleures qu'en inertie pure, et ce quelques soient les conditions d'environnement, comme les conditions de roulement.

Afin d'atteindre ce but, la présente invention propose un procédé destiné à la détermination de paramètres de navigation inertielle d'un porteur se déplaçant suivant des composantes cinématiques de déplacement modélisables, le procédé comportant une étape de mesures inertielles lesquelles peuvent comprendre une erreur dite d'inertie qui conduit à déterminer de façon inexacte lesdits paramètres, le procédé étant caractérisé en ce qu'il comporte les étapes suivantes :

(a) choisir, compte tenu d'un modèle cinématique du porteur, au moins une composante de déplacement selon laquelle l'intégration des mesures inertielles est supposée donner une valeur prédéterminée,

(b) intégrer des mesures selon la(es) composante(s) choisie(s),

(c) déterminer selon la(es) composante(s) un écart entre l'intégration obtenue à l'étape (b) et la valeur prédéterminée de l'étape (a),

(d) estimer en fonction de(s) l'écart(s) ainsi obtenu(s), une erreur d'inertie globale résultante des erreurs d'inertie associées auxdites composantes modélisables, et des valeurs à mettre à jour de paramètres variables du modèle cinématique (13),

(e) corriger lesdits paramètres de navigation inertielle en fonction de l'erreur d'inertie globale ainsi déterminée.

Des aspects préférés mais non limitatifs du procédé selon l'invention sont les suivants :

- les estimations dans l'étape (d) sont mises en oeuvre au moyen d'un filtre ;
- le filtre est un filtre de Kalman ;
- l'un des paramètres variables du modèle cinématique est un angle
  $\alpha$ compris entre au moins un axe du porteur et un axe d'une route suivie par ce porteur ;
- on modélise l'angle $\alpha$ en fonction d'au moins un paramètre traduisant un état de fonctionnement du porteur ;
- l'un des paramètres variables du modèle cinématique est une coordonnée de distance entre les axes de la route et du porteur.

Par ailleurs, l'invention propose un système de navigation inertiel embarqué dans un porteur se déplaçant suivant des composantes cinématiques de déplacement modélisables, comportant :

- des moyens de mesures inertielles,
- des moyens aptes à choisir, compte tenu d'un modèle cinématique du porteur, au moins une composante de déplacement selon laquelle une intégration des mesures inertielles est supposée donnée une valeur prédéterminée,

- des moyens aptes à intégrer des mesures selon la(es) composante(s) choisie(s),
- des moyens aptes à déterminer selon la(es) composante(s) un écart entre l'intégration et la valeur prédéterminée,
- des moyens aptes à estimer, en fonction de(s) l'écart(s) ainsi obtenu(s), une erreur d'inertie globale résultante des erreurs d'inertie associées auxdites composantes modélisables,
- des moyens aptes à corriger lesdits paramètres de navigation inertielle en fonction de l'erreur d'inertie globale déterminée,

caractérisé en ce qu'il comporte en outre des moyens aptes à estimer en fonction dudit écart des valeurs à mettre à jour de paramètres variables du modèle cinématique (13).

Le système selon l'invention est en outre capable de mettre en oeuvre le procédé présenté ci-dessus selon l'un de ses aspects préférés pris seul ou en combinaison.

Ainsi dans la présente invention, on s'affranchit avantageusement d'informations externes.

L'information supplémentaire utile à la correction des erreurs d'inertie est une information interne générée astucieusement par un modèle cinématique, c'est-à-dire un modèle du comportement du porteur en terme notamment de déplacements suivant des composantes choisies.

D'autres aspects, buts et avantages de l'invention apparaîtront mieux à la lecture de la description suivante, faite en référence aux dessins annexés sur lesquels :

- la figure 1 représente un porteur dans un repère en trois dimensions se déplaçant en ligne droite sur une route horizontale,
- la figure 2 représente schématiquement le fonctionnement d'un système de navigation selon l'invention,
- la figure 3 représente un porteur, tel un véhicule, se déplaçant en ligne droite sur une route inclinée,
- la figure 4 montre, en fonction du temps, une erreur de position suivant un axe Xb obtenue par une simulation d'une intégration en inertie pure du type de l'art antérieur ne mettant pas en oeuvre de recalage, le système étudié correspondant à celui de la figure 3,
- la figure 5 montre, en fonction du temps, une erreur d'altitude suivant un axe Zb obtenue par une simulation d'une intégration en inertie pure du type de l'art antérieur ne mettant pas en oeuvre de recalage, le système étudié correspondant à celui de la figure 3,
- la figure 6 montre, en fonction du temps, une erreur sur un angle $\alpha$ obtenue par une simulation d'une intégration en inertie pure du type de l'art antérieur ne mettant pas en oeuvre de recalage, le système étudié correspondant à celui de la figure 3,
- la figure 7 montre, en fonction du temps, une erreur de vitesse suivant l'axe Xb obtenue par une simulation d'une intégration en inertie pure du type de l'art antérieur ne mettant pas en oeuvre de recalage, le système étudié correspondant à celui de la figure 3,
- la figure 8 montre, en fonction du temps, une erreur de vitesse suivant l'axe Zb obtenue par une simulation d'une intégration en inertie pure du type de l'art antérieur ne mettant pas en oeuvre de recalage, le système étudié correspondant à celui de la figure 3,
- la figure 9 montre, en fonction du temps, une erreur de biais accéléromètre Z obtenue par une simulation d'une intégration en inertie pure du type de l'art antérieur ne mettant pas en oeuvre de recalage, le système étudié correspondant à celui de la figure 3,
- la figure 10 montre, en fonction du temps, une erreur de vitesse suivant l'axe Xb obtenue par une simulation d'une intégration en inertie pure du type de l'art antérieur ne mettant pas en oeuvre de recalage, le système étudié correspondant à celui de la figure 3,
- la figure 11 montre, en fonction du temps, une erreur de position suivant l'axe Xb obtenue par une simulation d'une intégration en inertie pure du type de l'art antérieur mettant en oeuvre un recalage d'une inertie pure, mais basée sur l'hypothèse que l'altitude du porteur varie peu autour d'une consigne, le système étudié correspondant à celui de la figure 3,
- la figure 12 montre, en fonction du temps, une erreur d'altitude suivant l'axe Zb obtenue par une simulation d'une intégration en inertie pure du type de l'art antérieur mettant en oeuvre un recalage d'une inertie pure, mais basée sur l'hypothèse que l'altitude du porteur varie peu autour d'une consigne, le système étudié correspondant à celui de la figure 3,
- la figure 13 montre, en fonction du temps, une erreur de vitesse suivant l'axe Xb obtenue par une simulation d'une intégration en inertie pure du type de l'art antérieur mettant en oeuvre un recalage d'une inertie pure, mais basée sur l'hypothèse que l'altitude du porteur varie peu autour d'une consigne, le système étudié correspondant à celui de la figure 3,

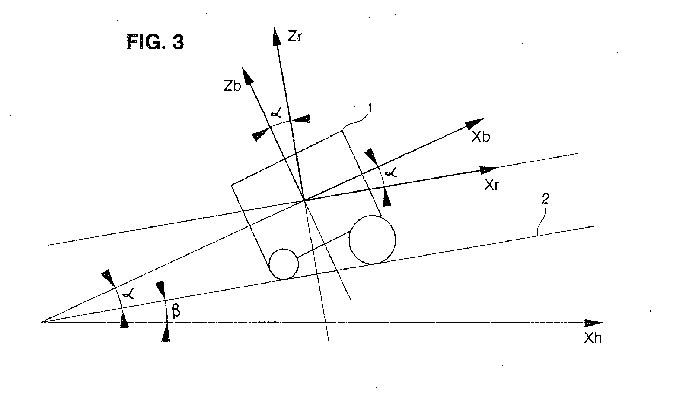

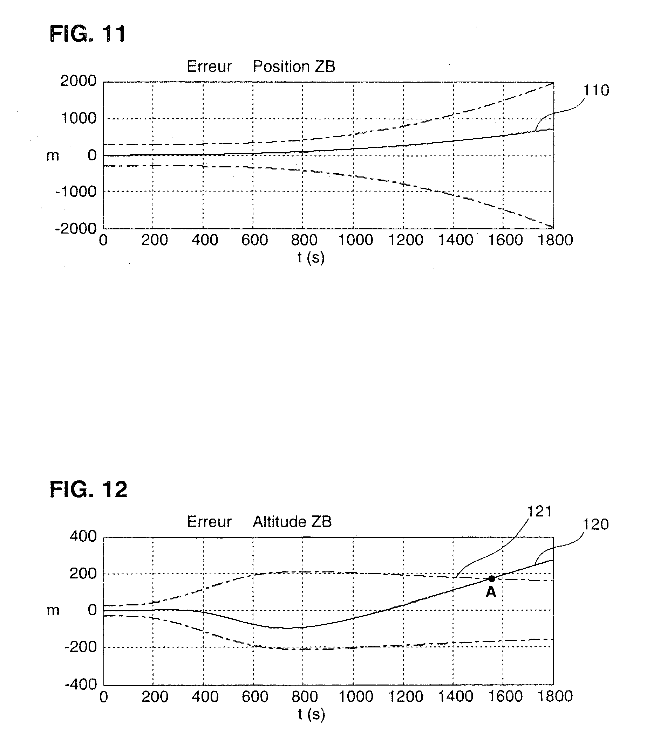

- la figure 11 montre, en fonction du temps, une erreur de vitesse suivant l'axe Zb obtenue par une simulation d'une intégration en inertie pure du type de l'art antérieur mettant en oeuvre un recalage d'une inertie pure, mais basée sur l'hypothèse que l'altitude du porteur varie peu autour d'une consigne, le système étudié correspondant à celui de la figure 3,

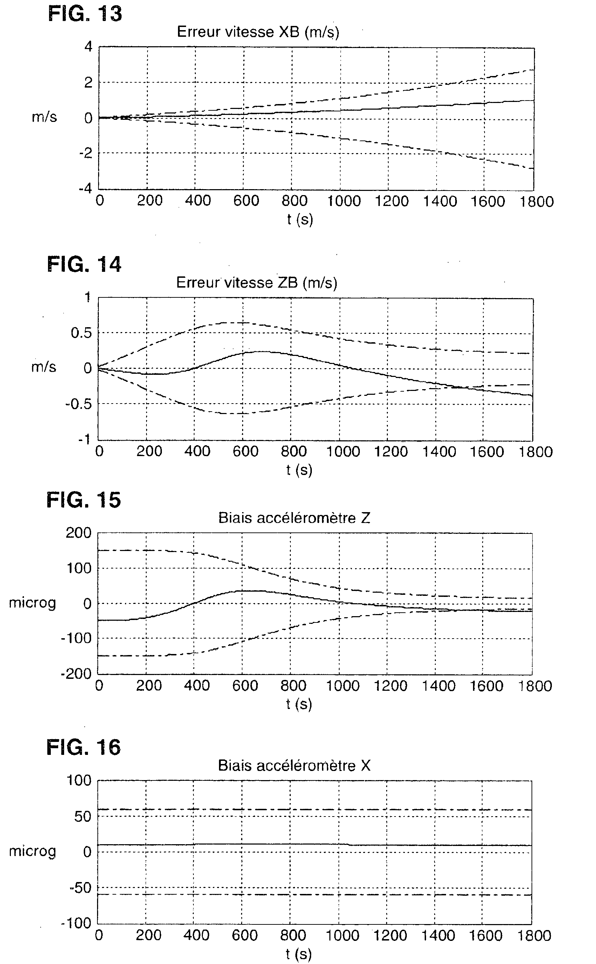

- la figure 15 montre, en fonction du temps, une erreur de biais accéléromètre Z obtenue par une simulation d'une intégration en inertie pure du type de l'art antérieur mettant en oeuvre un recalage d'une inertie pure, mais basée sur l'hypothèse que l'altitude du porteur varie peu autour d'une consigne, le système étudié correspondant à celui de la figure 3,
- la figure 16 montre, en fonction du temps, une erreur de biais suivant l'axe Xb obtenue par une simulation d'une intégration en inertie pure du type de l'art antérieur mettant en oeuvre un recalage d'une inertie pure, mais basée sur l'hypothèse que l'altitude du porteur varie peu autour d'une consigne, le système étudié correspondant à celui de la figure 3,

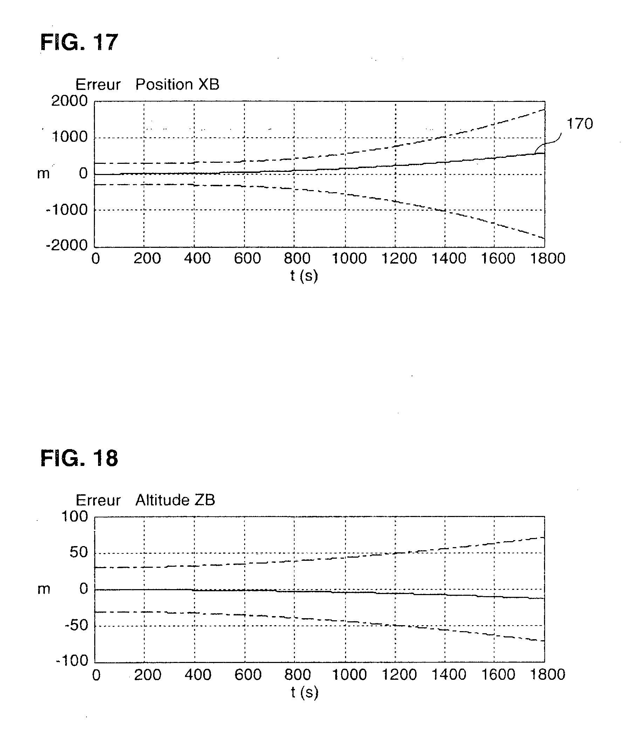

- la figure 17 montre, en fonction du temps, une erreur de position suivant l'axe Xb obtenue par une simulation d'une intégration en inertie pure conforme à l'invention, le système étudié correspondant à celui de la figure 3,
- la figure 18 montre, en fonction du temps, une erreur d'altitude suivant l'axe Zb obtenue par une simulation d'une intégration en inertie pure conforme à l'invention, le système étudié correspondant à celui de la figure 3,

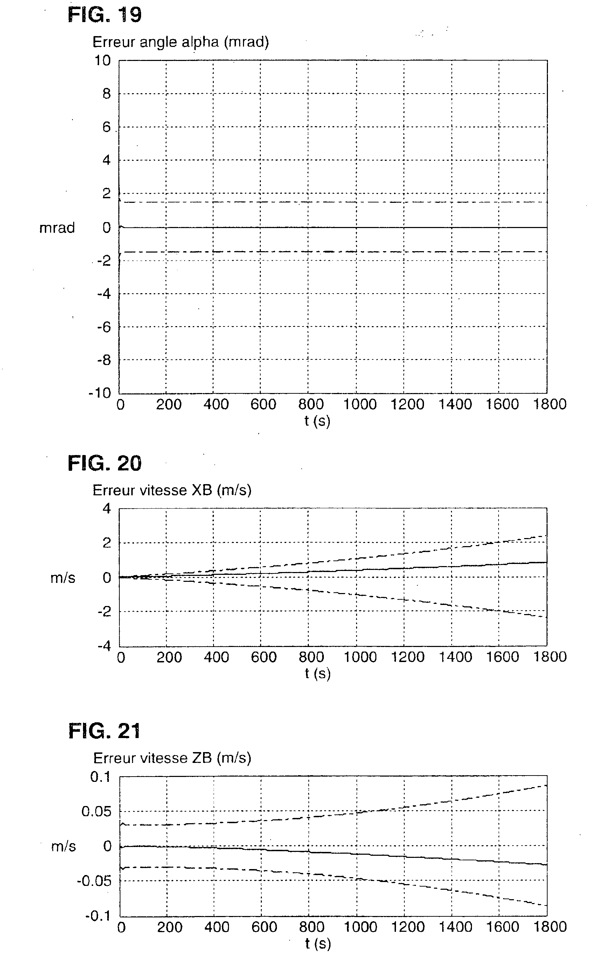

- la figure 19 montre, en fonction du temps, une erreur sur un angle $\alpha$ obtenue par une simulation d'une intégration en inertie pure conforme à l'invention, le système étudié correspondant à celui de la figure 3,
- la figure 20 montre, en fonction du temps, une erreur de vitesse suivant l'axe Xb obtenue par une simulation d'une intégration en inertie pure conforme à l'invention, le système étudié correspondant à celui de la figure 3,
- la figure 21 montre, en fonction du temps, une erreur de vitesse suivant l'axe Zb obtenue par une simulation d'une intégration en inertie pure conforme à l'invention, le système étudié correspondant à celui de la figure 3,

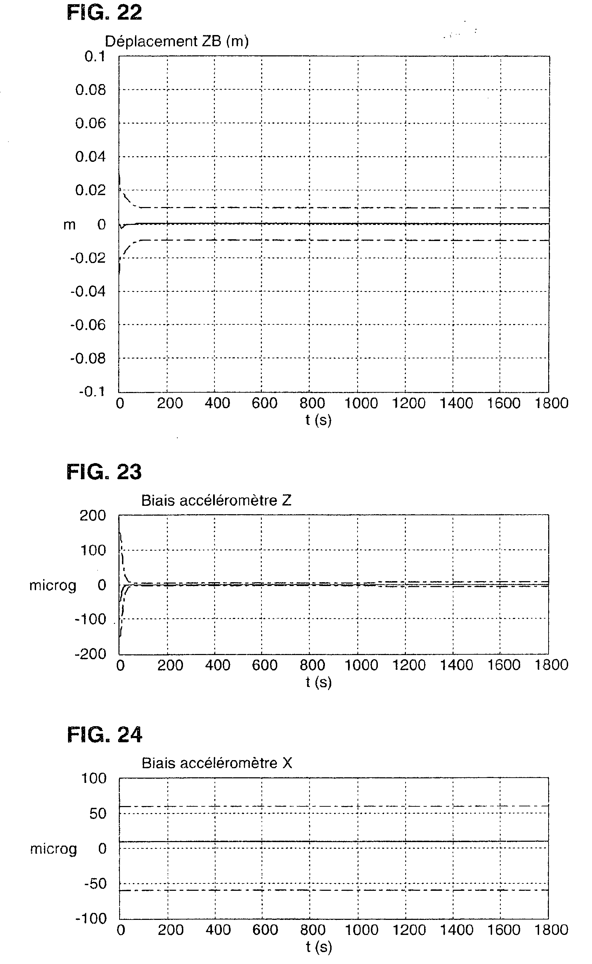

- la figure 22 montre, en fonction du temps, une erreur de déplacement suivant l'axe Zb obtenue par une simulation d'une intégration en inertie pure conforme à l'invention, le système étudié correspondant à celui de la figure 3,
- la figure 23 montre, en fonction du temps, une erreur de biais accéléromètre Z obtenue par une simulation d'une intégration en inertie pure conforme à l'invention, le système étudié correspondant à celui de la figure 3,
- la figure 24 montre, en fonction du temps, une erreur de biais accéléromètre X obtenue par une simulation d'une intégration en inertie pure conforme à l'invention, le système étudié correspondant à celui de la figure 3,

On va maintenant décrire un mode de réalisation de l'invention appliqué en tant qu'illustration non limitative à un véhicule terrestre.

Bien entendu la présente invention n'est nullement limitée à un tel véhicule.

On notera à cet égard que, selon les comportements cinématiques du porteur, les composantes de déplacement prises en compte par le modèle cinématique pourront être très différentes de celles présentées ici.

## Premier **exemple**

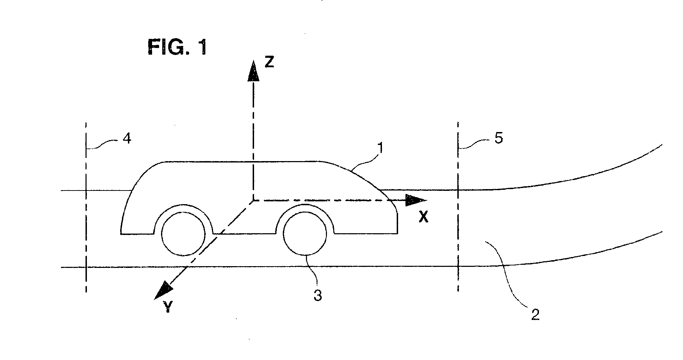

Dans un premier exemple, on a représenté à titre non limitatif un porteur 1 sur la figure 1, ou plus précisément dans cet exemple un véhicule 1 qui se déplace droit devant sur une route horizontale.

Le véhicule 1 est doté d'un système de navigation inertiel selon la présente invention capable de mesurer des déplacements selon des composantes cinématiques modélisables.

Dans le cas d'un tel véhicule, il est judicieux d'associer les composantes cinématiques aux axes de déplacement de ce véhicule.

A cet égard, la figure 1 montre trois axes de déplacement X, Y, Z, l'axe X étant parallèle à la direction de marche et les deux axes Y et Z transverses ou sensiblement transverses à l'axe X.

On notera ici que les trois axes ne forment pas forcément un trièdre orthonormé.

Pour déterminer précisément le déplacement selon l'axe X, la présente invention s'affranchit de l'utilisation d'une information extérieure comme celle qui pourrait provenir d'un odomètre dans le cas d'un véhicule roulant.

Selon la présente invention, l'information supplémentaire est gérée par un modèle cinématique qui, à partir de mesures inertielles suivant les axes Y et Z, permet de déterminer avec très peu d'erreur (par rapport à une détermination en inertie pure), les déplacements selon l'axe X.

A ce titre, le modèle cinématique ne choisit pas les axes Y et Z au hasard.

Ils ont été choisis de telle sorte que si des mesures inertielles étaient mises en oeuvre suivant leur direction respective, on obtiendrait idéalement un résultat connu du modèle cinématique une fois ces mesures intégrées.

Par exemple, lorsque le véhicule se déplace essentiellement en ligne droite, c'est-à-dire suivant une direction parallèle à X, le modèle prévoit que les mesures inertielles des déplacements selon les axes Y et Z doivent être nulles.

En effet, sur une portion de trajet particulière, typiquement une portion de trajet 4,5 où le véhicule ne change pas de cap, le véhicule 1 opère notamment des mouvements de caisse qui induisent en temps réel des déplacements selon les axes Y et Z, cependant, sur la durée nécessaire à parcourir ladite portion de trajet 4,5, ces déplacements sont en moyenne nuls, car le véhicule revient toujours vers une position d'équilibre tant selon Y que selon Z.

Bien entendu, ceci ne vaut pas lorsque la durée entre deux observations des déplacements du véhicule 1 est telle que celui-ci a eu le temps de changer de cap en tournant par exemple à droite ou à gauche, car la prévision du modèle selon laquelle les mesures suivant Y sont nulles (notamment les mesures d'accélération et de vitesse selon cet axe) n'est plus exacte en virage.

L'invention prévoit dans ce cas par exemple de complexifier le modèle cinématique.

Le modèle qui analyse constamment les mesures relatives au comportement du véhicule, est informé par ces dernières sur les conditions de virement (notamment par analyse des mesures de rotation du véhicule à l'aide par exemple d'un gyromètre) et adapte ses prévisions de déplacement selon les axes choisis pour faire converger le système vers cette prévision et pour déduire au mieux les déplacements selon les composantes recherchées dans l'espace en trois dimensions.

Par exemple, le modèle peut déterminer que, selon les dernières mesures de rotation, la vitesse de déplacement prévue et vers laquelle le système doit converger est égale à une valeur précise non nulle selon l'axe Y choisi durant cette phase de virage.

On attire ici l'attention sur le fait que les mesures inertielles et le choix des axes à considérer par le modèle ont lieu fréquemment dans le temps.

Une telle fréquence de mise à jour permet une détermination plus fine des déplacements du porteur puisqu'elle permet de les étudier tout au long du trajet.

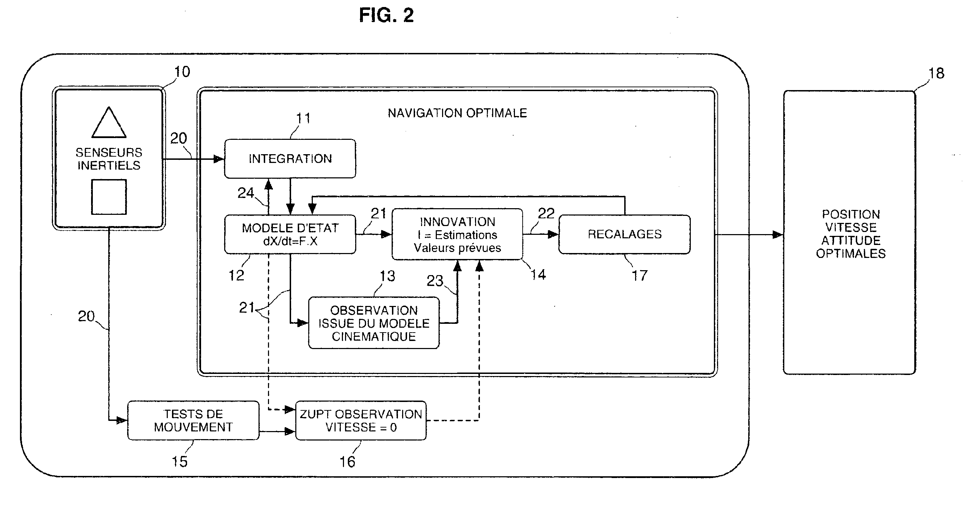

En se référant maintenant à la figure 2, on va décrire plus précisément le fonctionnement du système de l'invention.

Selon des conditions de déplacement (ligne droite, virage, montée, etc.) mesurées à un instant précédent, le modèle cinématique effectue un choix quant aux composantes de déplacement du porteur à analyser.

Une fois ces composantes choisies, des mesures inertielles 20 suivant ces composantes sont mises en oeuvre à l'aide de capteurs inertiels 10, tels notamment des gyroscopes/gyromètres et/ou accéléromètres, judicieusement placés sur le porteur 1.

Pour reprendre l'exemple du véhicule, les mesures inertielles 20 sont mises en oeuvre suivant les axes Y et/ou Z puisque, dans le cas d'une ligne droite représentée sur la figure 1, le modèle prévoit une valeur de déplacement nulle sur ces axes.

On notera ici que le procédé selon l'invention prévoit également la possibilité de contrôler l'emplacement et l'orientation de ces capteurs 10 afin d'accroître l'autonomie vis-à-vis de changements éventuels futurs.

Ces mesures inertielles 20 sont ensuite intégrées 11 afin de déterminer dans le bloc 13, que nous décrirons plus loin dans le texte, les informations inertielles d'attitude, de vitesse et de position.

Dans le cas où l'on peut mettre en oeuvre une hybridation à vitesse nulle 16, c'est-à-dire qu'un arrêt du véhicule est rendu possible (typiquement un arrêt naturel), ces mesures 20 permettent d'analyser 15 les mouvements du véhicule 1 pour détecter les arrêts et ainsi d'estimer les erreurs typiquement de dérives ou de biais notamment suivant l'axe principal de direction X.

Mais, bien entendu, comme le veut l'invention, ces arrêts ne sont aucunement obligatoires.

Une fois l'intégration 11 des mesures inertielles 20 effectuées, on utilise un modèle d'état 12 qui permet d'estimer les valeurs de paramètres d'une matrice X.

Le modèle d'état est basé typiquement sur une équation de la forme suivante :

$$\frac{dX}{dt} = f(X,t) \quad \text{ou} \quad \frac{dX}{dt} = F.X \qquad (1)$$

où f est une fonction non-linéaire et F(t) sa matrice d'état linéarisée, X un vecteur d'état, t le temps.

Selon un aspect préféré de l'invention, on utilisera un filtre de Kalman, mais bien entendu d'autres types de filtre connus par l'homme du métier pourront être utilisés selon les cas traités.

En ce qui concerne la conception d'un tel filtre de Kalman, il existe de nombreux documents auxquels on pourra se référer dont par exemple : .. ,« Applied Optimal Estimation » [1].

On notera également que parmi les paramètres de la matrice X on trouve des paramètres de vitesse, accélération, angle de rotation ou attitude.

Par ailleurs, selon un autre aspect de l'invention, on prévoit que le modèle cinématique 13 soit paramétrable (paramètres variables), si bien que la matrice X peut aussi contenir des paramètres de ce modèle 13.

Les valeurs estimées 21 des paramètres de la matrice X sont fournies simultanément, d'une part à un bloc 14, et d'autre part au modèle cinématique 13 du véhicule 1.

Le modèle cinématique 13 inclut toutes les propriétés cinématiques utiles du véhicule 1 et permet notamment de relier les déplacements estimés 21 suivant lesdites composantes choisies au déplacement suivant une composante recherchée (suivant l'axe X par exemple).

Par ailleurs, à partir de ces estimations 21, le modèle fournit lesdites valeurs prévues 23 au bloc 14.

Par exemple, comme évoqué plus haut, dans le cas du véhicule qui se dirige droit devant, l'estimation de la vitesse suivant la composante de déplacement Y doit être sensiblement nulle.

Le modèle cinématique 13, après analyse des estimations 21, déduit que le véhicule se dirige effectivement droit devant et fournit alors ladite valeur nulle prévue 23 au bloc 14.

On notera également, que le modèle cinématique 13 fournit aussi les valeurs des paramètres déterminées à l'itération précédente à partir de l'intégration 11 et du modèle d'état 12.

Bien entendu et comme nous l'avons mentionné plus haut, dans le cas d'un déplacement en virage, le modèle cinématique 13 connaissant le comportement du véhicule en virage utilise les estimations 21 (par exemple les estimations issues des mesures d'un gyroscope ou gyromètre) pour fournir une valeur prévue 23 adaptée à cette nouvelle situation.

Ensuite, le bloc 14 détermine un écart entre une valeur estimée et la valeur prévue 23 fournie par le modèle cinématique 13, la valeur prévue 23 concernant le même paramètre que la valeur de l'estimation en question.

Dans notre exemple, le bloc 14 compare notamment l'estimation de la vitesse suivant Y à ladite valeur prévue 23 de vitesse suivant Y.

Le résultat I de cette comparaison (I est donc une matrice d'erreur, couramment désignée par matrice d'innovation) est fourni à un bloc 22 pour recaler des paramètres du modèle d'état 12 (estimation des biais et dérives, etc.) au moyen d'une boucle.

Par exemple, l'erreur inertielle observée sur la vitesse suivant Y dans le bloc 14 sert à recaler des paramètres du modèle d'état 12 et corriger au fur et à mesure d'itérations de boucle les erreurs sur l'estimation de la vitesse suivant Y.

Par ailleurs, comme représentée par la flèche 24 le recalage des paramètres du modèle d'état 12 permet également de corriger des erreurs sur les mesures 20 intégrées initialement, ce qui améliore encore ladite correction des erreurs d'estimation (dans l'exemple considéré ici sur l'estimation notamment de la vitesse suivant Y).

Les étapes que nous venons de décrire et qui font intervenir les blocs 11, 12, 13, 14 et 17 sont donc mises en oeuvre en boucle de nouvelles fois afin de diminuer constamment les erreurs d'inertie et d'améliorer ainsi les estimations de position, vitesse et attitude.

On notera également que la fréquence des recalages est préférentiellement inférieure à celle des mesures 20 issues des capteurs inertiels 10.

Finalement, comme représenté sur la figure 2, les dernières estimations des paramètres de navigation inertielle du porteur peuvent être fournies 18 à un utilisateur par l'intermédiaire par exemple d'un écran d'affichage.

Ces estimations peuvent également être fournies à un autre système si celui-ci en a une utilité.

Comme évoqué précédemment, le système de navigation selon la présente invention peut être avantageusement complété par d'autres systèmes connus.

On peut par exemple le compléter avec un système d'hybridation à vitesse nulle, ce dernier n'étant sollicité que dans les cas où les conditions extérieures le permettent (un arrêt naturel, etc.).

A cet égard, la figure 2 illustre une telle éventualité en flèches pointillées.

Le bloc 16 qui correspond à la mise en oeuvre d'une hybridation à vitesse nulle est mis en oeuvre en parallèle du bloc du modèle cinématique 13 de l'invention, les estimations 21 étant dans ce cas fournies aux blocs 13 et 16.

On notera de ce fait que la dimension de la matrice H a donc augmenté.

### Deuxième exemple

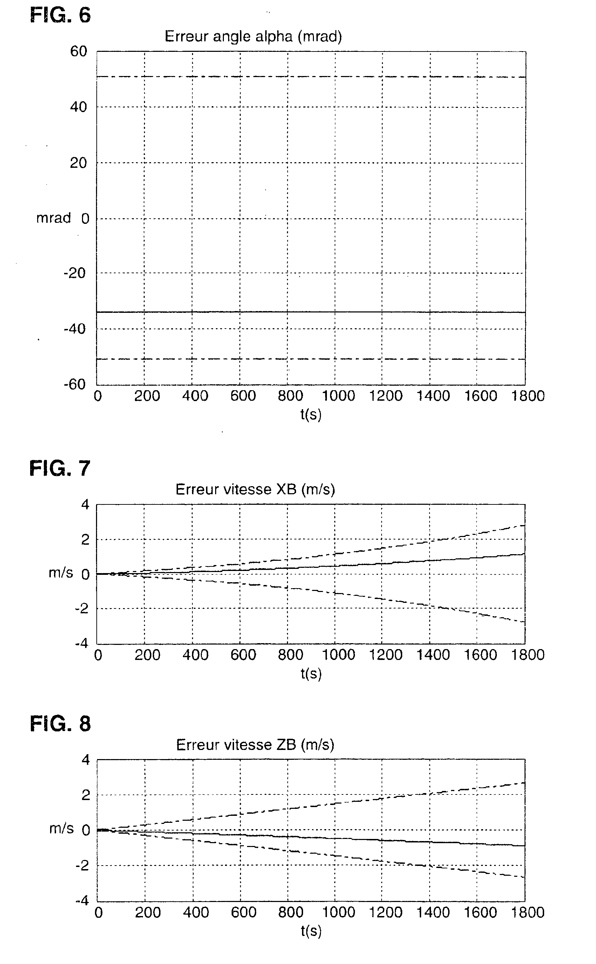

Un deuxième exemple non limitatif permettant d'illustrer l'invention est décrit ci-dessous conjointement aux figures 3 à 24.

On a maintenant représenté sur la figure 3 le véhicule 1 en train de monter en ligne droite, sur une route 2.

La route 2 d'axe longitudinal Xr et vertical Zr est donc inclinée d'un angle $\beta$ par rapport à l'axe horizontal Xh (figure 3).

En outre, les axes du véhicule Xb et Zb forment un angle $\alpha$ avec les axes de la route Xr et Zr respectivement.

Comme les axes liés à la centrale peuvent différer ceux du véhicule 1 (Xb, Yb), on harmonise la centrale dans les axes de ce dernier.

On notera que l'angle $\alpha$ fait partie des variables d'état estimées par le filtre de Kalman.

On notera en outre que chaque repère possède un troisième axe (Yb, Yr) agencé de sorte qu'on obtient des repères orthonormés.

A cet égard, des mesures inertielles peuvent être effectuées notamment sur l'axe Yb.

Dans cet exemple non limitatif, le modèle cinématique prévoit que le déplacement suivant l'axe Zr est nul (un autre exemple non limitatif aurait été de considérer un déplacement nul suivant l'axe Yb ou Yr).

Selon l'invention, on met alors en oeuvre une observation selon l'axe Zr à partir de l'angle $\alpha$ et d'une mesure de déplacement suivant l'axe Zb.

Puis on détermine une innovation I afin de recaler les paramètres du système, c'est-à-dire que l'on compare ladite observation à la valeur zéro prévue par le modèle cinématique.

A titre d'illustration, on donne ci-après des équations de modélisation du système simplifié considéré avec comme hypothèse celle d'un terrain plat.

Soient :

- Vxb, Vzb la vitesse du véhicule 1 selon l'axe Xb et Zb respectivement,

- xx,zz la position du véhicule 1 selon l'axe Xb et Zb respectivement,
- Phiy l'erreur de verticale selon Yb,
- Dy la dérive d'un gyroscope suivant l'axe Yr,
- bx le biais accéléromètre x
- bz le biais accéléromètre z
- alpha l'angle $\alpha$,
- depZ les déplacements suivant l'axe Zr, et
- g un modèle de gravité.

En raisonnant sur les erreurs pour linéariser autour de la solution optimale, le filtre de Kalman peut notamment avoir la forme présentée ci-dessous (on notera que le symbole $\delta$ désigne un calcul d'erreur) :

$$\delta\dot{Phiy} = \delta Dy,$$

$$\delta\dot{V}xb = g \times \delta Phiy + \delta bx,$$

$$\delta\dot{xx} = \delta Vxb,$$

$$\delta\dot{zz} = \delta Vzb + Vxb \times \delta Phiy + \delta Vxb \times Phiy,$$

$$\delta Vzb = \delta bz$$

$$\delta\dot{depZ} = \delta Vzb + Vxb \times \delta alpha + \delta Vxb \times alpha,$$

$$\delta\dot{bx} = 0,$$

$$\delta\dot{bz} = 0,$$

$$\delta\dot{Dy} = 0,$$

$$\delta\dot{alpha} = 0,$$

On obtient donc la matrice d'état F suivante :

F($\delta$Phiy, $\delta$dy) = 1,
F($\delta$Vxb, $\delta$Phiy) = g,
F($\delta$Vxb, $\delta$bx) =1,
F($\delta$xx, $\delta$Vxb) = 1,
F($\delta$zz, $\delta$Vzb) = 1,
F($\delta$zz, $\delta$Phiy) = Vxb,
F($\delta$zz, $\delta$Vxb) = Phiy,
F($\delta$Vzb, $\delta$bz) = 1,
F($\delta$depZ, $\delta$Vzb)=1,
F($\delta$depZ, $\delta$alpha)=Vxb,
F($\delta$depZ, $\delta$Vxb) =alpha.

L'observation du filtre de Kalman est directement le déplacement suivant l'axe Zr, soit :

$$H(\delta depZ) = 1$$

Où H est une matrice d'observation.

Ladite innovation I est calculée comme suit :

$$I = 0 - depZ,$$

sachant que depZ est l'intégrale de la projection des vitesses estimée du porteur selon la verticale de la route estimée par l'angle alpha, soit :

$$depZ = \int_0^t (Vzb*\cos(alpha) + Vxb*\sin(alpha)) \, dt$$

Nous présentons maintenant quelques résultats de simulation permettant de comparer des performances du système tel que proposé par l'invention et de systèmes de l'art antérieur.

On notera à titre préliminaire que les résultats ci-dessous ont été obtenus en considérant que la terre était plate pour simplifier les calculs et en effectuant les réglages suivants :

Trajectoire

- ■ Vitesse du porteur selon l'axe Xr = 20 m/s,
- ■ alpha = 34 mrad,
- ■ $\beta$ = 17 mrad,

Erreurs de la centrale simulée (dans l'exemple)

- ■ Dy = 0.01°/h
- ■ bx= 10 $\mu$g
- ■ bz = 50 $\mu$g

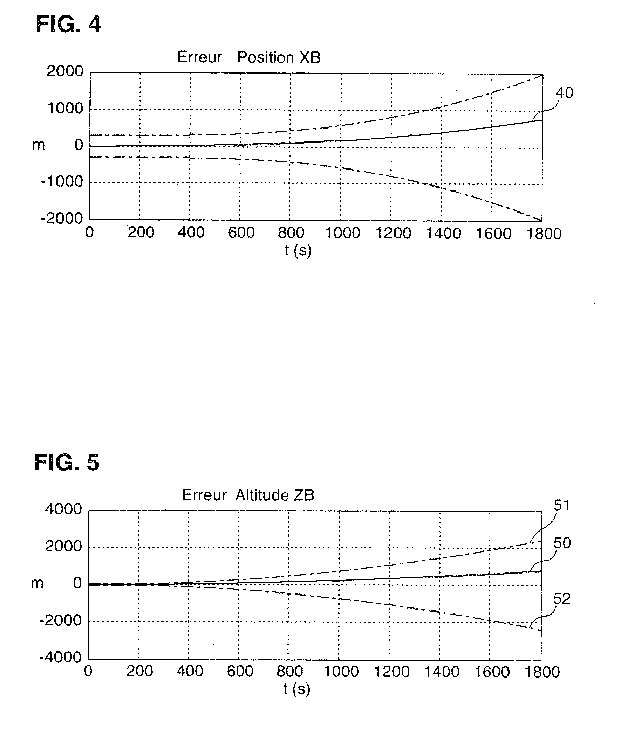

Les résultats de simulation sont présentés de la figure 4 à la figure 24 et répartis en trois groupes.

Un premier groupe (figures 4-10) concerne des résultats que l'on peut obtenir avec un système en inertie pure de l'art antérieur qui ne met pas en oeuvre un recalage des erreurs d'inertie.

Un deuxième groupe (figures 11-16) concerne des résultats que l'on peut obtenir avec un système d'hybridation de l'art antérieur, généralement utilisé, qui met en oeuvre un recalage des erreurs d'inertie et qui est basé sur une hypothèse selon laquelle l'altitude du véhicule variant peu autour d'une consigne.

Un troisième groupe (figures 17-24) concerne des résultats que l'on obtient avec le système d'hybridation tel que proposé dans cet exemple de l'invention.

Sur chacune des figures 4-24, les courbes symétriques en pointillées représentent la covariance à 3$\sigma$ de la grandeur illustrée.

Par exemple, sur la figure 5 la courbe 50 correspond à l'erreur intégration sur l'altitude suivant l'axe Zb, tandis que les courbes 51 et 52 représentent les covariances à 3$\sigma$ de cette erreur dans le filtre.

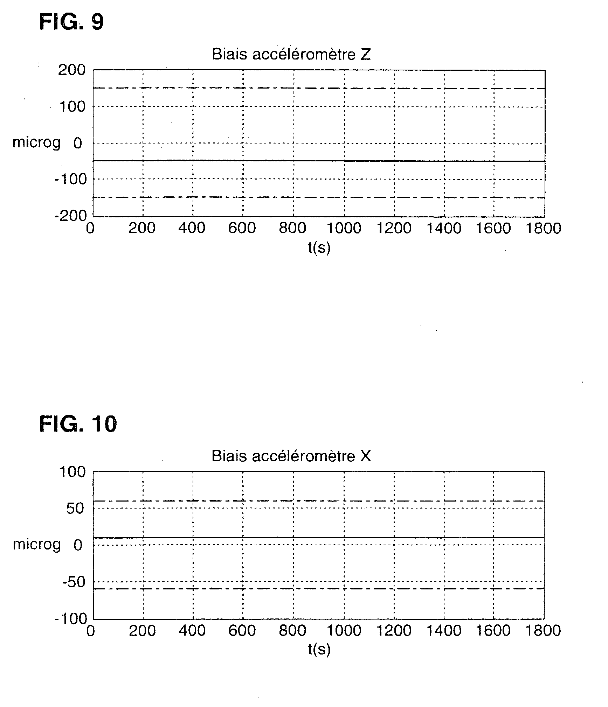

En se référant tout d'abord au premier groupe de figures, en particulier à la figure 10 représentant un biais accéléromètre Z en fonction du temps, on peut constater l'absence de recalage notamment par le fait que les courbes de covariance 51, 52 ne se rapprochent pas.

Au contraire, dans le deuxième et troisième groupe, en particulier les figures 15 et 23, représentant chacune le biais accéléromètre Z en fonction du temps, on peut observer l'effet du recalage notamment par la convergence des courbes de covariance.

Sans analyser dans le détail chacune des figures 4 à 24, on peut simplement observer de manière générale que les meilleurs résultats sont obtenus avec l'hybridation selon l'invention.

Notamment, on obtient avec l'invention une erreur d'altitude de 15 mètres au bout de 30 minutes de navigation (figure 18), contre plus de 750 mètres avec l'hybridation du type de l'art antérieur ne mettant pas en oeuvre de recalage (figure 5).

Pour ce qui concerne l'hybridation du type de l'art antérieur basée sur l'hypothèse que l'altitude reste constante (groupe 2), on peut observer d'après la figure 12 que la courbe d'erreur sur l'altitude 120 diverge et croise, au point A, la courbe de covariance supérieure 121 (voir figure 12), ce qui montre qu'utiliser une hybridation de ce type peut engendrer des risques de divergence pour le cas d'exemple considéré ici.

Ceci est du au fait que l'altitude est considérée comme constante alors que le véhicule monte sur la route 2 ; l'hypothèse est donc inexacte.

En comparant maintenant les figures 4, 11 et 17 on peut constater que l'erreur en position suivant l'axe Xb est avantageusement inférieure dans le cas de l'hybridation selon l'invention.

A titre d'exemple, à t=1800s, les courbes 40 et 110 atteignent environ 750 mètres, tandis que la courbe 170 relative à l'invention atteint environ 500 mètres.

Une telle différence illustre l'intérêt de l'utilisation selon l'invention du modèle cinématique 13, lequel permet à partir de mesures inertielles suivant un axe choisi d'aider dans une certaine mesure à la détermination notamment des déplacements selon un autre axe.

Selon une variante du mode de réalisation présenté dans ce deuxième exemple, on peut encore améliorer les performances du système de navigation en augmentant encore la complexité du modèle cinématique.

Par exemple, l'angle $\alpha$ peut être modélisé en tenant compte d'au moins un paramètre définissant un état de fonctionnement du véhicule (notamment en tenant compte de son accélération suivant l'axe Xr) et/ou en tenant compte d'au moins une caractéristique technique de ce véhicule (notamment la position de son centre de gravité par rapport à la position de la centrale ou encore la raideur du véhicule).

A cet égard, un modèle préféré de l'invention de l'angle $\alpha$ peut s'exprimer sous la forme suivante :

$$\alpha = \alpha_c + k * \gamma_{xr}$$

où les paramètres $\alpha_c$, $k$ et $\gamma_{xr}$ correspondent respectivement à une composante constante, un facteur de proportionnalité traduisant la raideur du véhicule et l'accélération de ce dernier mesurée selon l'axe Xr.

Selon l'invention, les paramètres $\alpha_c$ et $k$ peuvent être estimés, en particulier par le filtre de Kalman.

Par ailleurs, afin d'améliorer les performances du système de navigation dans des conditions de virement du véhicule, on peut selon un autre aspect de l'invention appliqué par exemple à ce deuxième exemple, considérer que dans les conditions précitées, l'axe Zr, suivant lequel on rappelle que les déplacements sont supposés nuls, change de position dans l'espace notamment en fonction de la cinématique du véhicule.

On peut ainsi complexifier le modèle de l'invention en modélisant cette position selon les conditions de virement en temps réel, notamment selon une ou plusieurs vitesses angulaires (vitesse de rotation en cap, par exemple).

La position de l'axe Zr est par exemple modélisée par des cordonnées de distance suivant les axes Xr et Yr, respectivement.

Et avantageusement, ces coordonnées sont estimées par le filtre de Kalman et correspondent bien entendu à la position de l'axe Zr suivant lequel les déplacements du véhicule sont nuls.

Bien entendu, la présente invention n'est nullement limitée à la forme de réalisation décrite ci-dessus et représentée sur les dessins. En effet, de nombreuses variantes peuvent dériver du concept général de la présente invention.

C'est en particulier le cas pour ce qui concerne les composantes de déplacement considérées par le modèle cinématique 13 puisque celles-ci dépendent notamment du type de porteur et de ses comportements cinématiques modélisables.

Ainsi, une variante de l'invention peut consister à utiliser des composantes angulaires de déplacement cinématique.

Par exemple un système qui serait placé sur un dispositif d'observation qui a une vitesse de rotation en cap constante (par exemple un radar, un satellite, etc).

Par ailleurs, l'homme du métier comprendra que le nombre d'axes à choisir pour déduire une information sur un autre axe dépend du cas auquel l'invention s'applique.

On rappelle à ce titre que, selon le procédé de l'invention, on choisit, compte tenu du modèle cinématique du porteur, au moins une composante de déplacement selon laquelle l'intégration des mesures inertielles est supposée donnée une valeur prédéterminée.

Une composante pourra donc suffire à améliorer les performances d'un système fonctionnant en inertie pure.

Toutefois, il va de soi que plus il existe une variété d'informations externes et plus les performances du système devraient augmenter.

Ainsi, l'utilisation de deux composantes de déplacement voire plus (linéaire ou angulaire ou une combinaison) ne devrait être que bénéfique au système de l'invention.

Enfin, d'autres variantes de l'invention peuvent également concerner la nature des paramètres sur lequel le procédé de l'invention, décrit à la figure 2, effectue des corrections.

A titre d'exemple, le procédé peut modéliser une composante de déplacement et/ou une composante de vitesse et/ou une composante d'accélération.

## REFERENCES BIBLIOGRAPHIQUES

[1] : Applied Optimal Estimation, The Analytic Sciences Corporation, Ed. Arthur Gelb, 1974.

[2] : The Aiding of a Low-Cost Strapdown Inertial Measurement Unit Using Vehicle Model Constraints for Land Vehicle Applications, Gamini Dissanayake, IEEE Transactions on Robotics and Automation, Vol. 17, n° 5, octobre 2001.

## Revendications

**1.** Procédé itératif destiné à la détermination de paramètres (18) de navigation inertielle d'un porteur (1) se déplaçant suivant des composantes cinématiques de déplacement modélisables, le procédé comportant une étape de mesures inertielles (20) lesquelles peuvent comprendre une erreur dite d'inertie qui conduit à déterminer de façon inexacte lesdits paramètres (18), le procédé étant **caractérisé en ce qu'**il comporte les étapes suivantes :

(a) choisir, compte tenu d'un modèle cinématique (13) du porteur (1), au moins une composante de déplacement selon laquelle l'intégration (11) des mesures inertielles (20) est supposée donner une valeur prédéterminée,
(b) intégrer (11) des mesures (20) selon la(es) composante(s) choisie(s),
(c) déterminer (14) selon la(es) composante(s), un écart entre l'intégration (11) obtenue à l'étape (b) et la valeur prédéterminée de l'étape (a),
(d) estimer en fonction de(s) l'écart(s) ainsi obtenu(s) une erreur d'inertie globale résultante des erreurs d'inertie associées auxdites composantes modélisables, et des valeurs à mettre à jour de paramètres variables du modèle cinématique (13),
(e) corriger lesdits paramètres de navigation inertielle en fonction de l'erreur d'inertie globale ainsi déterminée.

**2.** Procédé selon la revendication 1, **caractérisé en ce que** les estimations dans l'étape (d) sont mises en oeuvre au moyen d'un filtre.

**3.** Procédé selon la revendication 2, **caractérisé en ce que** le filtre est un filtre de Kalman.

**4.** Procédé selon l'une des revendications précédentes, **caractérisé en ce que** l'un des paramètres variables du modèle cinématique est un angle $\alpha$ compris entre au moins un axe (Xb) du porteur et un axe (Xr) d'une route suivie par ce porteur.

**5.** Procédé selon la revendication 4, **caractérisé en ce que** l'on modélise l'angle $\alpha$ en fonction d'au moins un paramètre traduisant un état de fonctionnement du porteur.

**6.** Procédé selon l'une des revendications 4 à 5, **caractérisé en ce que** l'un des paramètres variables du modèle cinématique est une coordonnée de distance entre les axes de la route et du porteur.

**7.** Système de navigation inertiel embarqué dans un porteur (1) se déplaçant suivant des composantes cinématiques de déplacement (X; Y ; Z) modélisables, comportant :

- des moyens de mesures inertielles,

- des moyens aptes à choisir, compte tenu d'un modèle cinématique (13) du porteur, au moins une composante de déplacement (X; Y ; Z) selon laquelle une intégration des mesures inertielles est supposée donnée une valeur prédéterminée,
- des moyens aptes à intégrer des mesures selon la(es) composante(s) choisie(s) (X; Y ; Z),
- des moyens aptes à déterminer selon la(es) composante(s) un écart entre l'intégration et la valeur prédéterminée,
- des moyens aptes à estimer, en fonction de(s) l'écart(s) ainsi obtenu(s), une erreur d'inertie globale résultante des erreurs d'inertie associées auxdites composantes modélisables (X; Y ; Z),
- des moyens aptes à corriger lesdits paramètres de navigation inertielle
en fonction de l'erreur d'inertie globale déterminée,
**caractérisé en ce qu'**il comporte en outre des moyens aptes à estimer de façon itérative en fonction dudit écart des valeurs à mettre à jour de paramètres variables du modèle cinématique (13).

8. Système selon la revendication 7, **caractérisé en ce qu'**il comporte en outre des moyens aptes à mettre en oeuvre le procédé selon l'une quelconque des revendications 2 à 6.


**Patentansprüche**

1. Iteratives Verfahren, das zum Bestimmen von Parametern (18) zur Trägheitsnavigation eines Trägerobjekts (1) vorgesehen ist, das sich gemäß modellierbaren kinematischen Bewegungskomponenten bewegt, wobei das Verfahren einen Schritt mit Trägheitsmessungen (20) umfasst, die einen als Trägheitsfehler bezeichneten Fehler umfassen können, der dazu führt, dass die Parameter ungenau (18) bestimmt werden, wobei das Verfahren **dadurch gekennzeichnet ist, dass** es die folgenden Schritte umfasst:

   a) Auswählen, unter Berücksichtigung eines kinematischen Modells (13) des Trägerobjekts (1), wenigstens einer Bewegungskomponente, bezüglich der angenommen wird, dass die Integration (11) der Trägheitsmessungen (20) einen vorgegebenen Wert ergibt,
   b) Integrieren (11) der Messungen (20) bezüglich der einen oder mehreren ausgewählten Komponenten,
   c) Bestimmen (14), bezüglich der einen oder mehreren Komponenten, einer Abweichung zwischen der in Schritt b) erhaltenen Integration (11) und dem vorgegebenen Wert aus Schritt a),
   d) Schätzen, in Abhängigkeit von der einen oder den mehreren so erhaltenen Abweichungen, eines Gesamtträgheitsfehlers, der sich aus den Trägheitsfehlern ergibt, die zu den modellierbaren Komponenten gehören, sowie von Werten zum Aktualisieren von veränderlichen Parametern des kinematischen Models (13),
   e) Korrigieren der Parameter zur Trägheitsnavigation in Abhängigkeit von dem so bestimmten Gesamtträgheitsfehler.

2. Verfahren nach Anspruch 1, **dadurch gekennzeichnet, dass** die Schätzungen in Schritt (d) mittels eines Filters ausgeführt werden.

3. Verfahren nach Anspruch 2, **dadurch gekennzeichnet, dass** das Filter ein Kalmanfilter ist.

4. Verfahren nach einem der vorhergehenden Ansprüche, **dadurch gekennzeichnet, dass** einer der veränderlichen Parameter des kinematischen Modells ein Winkel $\alpha$ ist, der zwischen wenigstens einer Achse (Xb) des Trägerobjekts und einer Achse (Xr) einer von diesem Trägerobjekt befahrenen Straße auftritt.

5. Verfahren nach Anspruch 4, **dadurch gekennzeichnet, dass** der Winkel $\alpha$ als Funktion wenigstens eines Parameters modelliert wird, der einen Betriebszustand des Trägerobjekts überträgt.

6. Verfahren nach einem der Ansprüche 4 bis 5, **dadurch gekennzeichnet, dass** einer der veränderlichen Parameter des kinematischen Modells eine Abstandskoordinate zwischen den Achsen der Straße und des Trägerobjekts ist.

7. System zur Trägheitsnavigation, das in einem Trägerobjekt (1) mitgeführt wird, das sich gemäß modellierbaren kinematischen Bewegungskomponenten (X; Y; Z) bewegt, Folgendes umfassend:

   - ein Mittel zur Trägheitsmessung,
   - ein Mittel, das dafür eingerichtet ist, unter Berücksichtigung eines kinematischen Modells (13) des Trägerobjekts, wenigstens eine Bewegungskomponente (X; Y; Z) auszuwählen, bezüglich der angenommen wird, dass eine Integration der Trägheitsmessungen einen vorgegebenen Wert ergibt,
- ein Mittel, das dafür eingerichtet ist, die Messungen bezüglich der einen oder mehreren ausgewählten Komponenten (X; Y; Z) zu integrieren,
- ein Mittel, das dafür eingerichtet ist, bezüglich der einen oder mehreren Komponenten eine Abweichung zwischen der Integration und dem vorgegebenen Wert zu bestimmen,
- ein Mittel, das dafür eingerichtet ist, in Abhängigkeit von der einen oder den mehreren so erhaltenen Abweichungen einen Gesamtträgheitsfehlers zu schätzen, der sich aus den Trägheitsfehlern ergibt, die zu den modellierbaren Komponenten (X; Y; Z) gehören,
- ein Mittel, das dafür eingerichtet ist, die Parameter zur Trägheitsnavigation in
Abhängigkeit von dem bestimmten Gesamtträgheitsfehler zu korrigieren,
**dadurch gekennzeichnet, dass** es außerdem ein Mittel umfasst, das dafür eingerichtet ist, in Abhängigkeit von dem Abstand Werte zum Aktualisieren von veränderlichen Parametern des kinematischen Models (13) iterativ zu schätzen.

8. System nach Anspruch 7, **dadurch gekennzeichnet, dass** es außerdem ein Mittel umfasst, das dafür eingerichtet ist, das Verfahren nach einem der Ansprüche 2 bis 6 auszuführen.

## Claims

1. An iterative method intended to determine the inertial navigation parameters (18) of a carrier (1) moving along with modelizable kinematic movement components, the method including a step of inertial measurements (20) which can include an error, known as the inertia error, which results in determining these parameters inaccurately (18), with the method being **characterised in that** it includes the following steps:

   a) choosing, on a kinematic model (13) of the carrier (1), at least one movement component according to which the integration (11) of the inertial measurements (20) is assumed to give a predetermined value,
   b) integration (11) of the measurements (20) according to the chosen component or components,
   c) determining (14), according to these components, a difference between the integration (11) obtained at step (b) and the predetermined value from step (a),
   d) estimating, as a function of the difference or differences thus obtained, an overall inertia error resulting from the inertia errors associated with the said modelizable components, and the values of the variable parameters of the kinematic model that are to be updated (13),
   e) correction of the said inertial navigation parameters as a function of the overall inertia error thus determined.

2. The method according to claim 1, **characterised in that** the estimates in step (d) are made by means of a filter.

3. The method according to claim 2, **characterised in that** the filter is a Kalman filter.

4. The method according to one of the preceding claims, **characterised in that** one of the variable parameters of the kinematic model is an angle $\alpha$ between at least one axis (Xb) of the carrier and an axis (Xr) of a road travelled by this carrier.

5. The method according to claim 4, **characterised in that** the angle $\alpha$ is modelled as a function of at least one parameter reflecting an operational state of the carrier.

6. The method according to one of claims 4 to 5, **characterised in that** one of the variable parameters of the kinematic model is a distance coordinate between the axes of the road and of the carrier.

7. An inertial navigation system mounted in a carrier (1) moving along with modelizable kinematic movement components(X; Y; Z), and that includes:

   - inertial measurement means,
   - means designed to choose, on a kinematic model (13) of the carrier, at least one movement component (X; Y; Z) according to which integration of the inertial measurements is assumed to give a predetermined value,
   - means designed to integrate measurements according to the chosen component or components (X; Y; Z),
   - means designed to determine, in accordance with the said components, a difference between the integration and the predetermined value,

- means designed to estimate, as a function of the difference or differences thus obtained, an overall inertia error resulting from the inertia errors associated with the said modelizable components (X; Y; Z),

- means designed to correct the said inertial navigation parameters as a function of the overall inertia error determined,

**characterised in that** it also includes means designed to iteratively estimate, in accordance with the said difference, values of the variable parameters of the kinematic model that are to be updated (13).

8. The system according to claim 7, **characterised in that** it also includes means designed to implement the method according to any one of claims 2 to 6.

**FIG. 1**

## FIG. 2

NAVIGATION OPTIMALE

SENSEURS INERTIELS

INTEGRATION

MODELE D'ETAT
dX/dt=F.X

INNOVATION
I = Estimations
Valeurs prévues

RECALAGES

OBSERVATION
ISSUE DU MODELE
CINEMATIQUE

TESTS DE
MOUVEMENT

ZUPT OBSERVATION
VITESSE = 0

POSITION
VITESSE
ATTITUDE
OPTIMALES

EP 1 819 984 B1

FIG. 3

## FIG. 4

Erreur   Position XB

## FIG. 5

Erreur  Altitude ZB

## FIG. 6

Erreur angle alpha (mrad)

## FIG. 7

Erreur vitesse XB (m/s)

## FIG. 8

Erreur vitesse ZB (m/s)

## FIG. 9

Biais accéléromètre Z

## FIG. 10

Biais accéléromètre X

## FIG. 11

## FIG. 12

## FIG. 13

Erreur vitesse XB (m/s)

m/s

t (s)

## FIG. 14

Erreur vitesse ZB (m/s)

m/s

t (s)

## FIG. 15

Biais accéléromètre Z

microg

t (s)

## FIG. 16

Biais accéléromètre X

microg

t (s)

## FIG. 17

Erreur   Position XB

## FIG. 18

Erreur   Altitude ZB

## FIG. 19

Erreur angle alpha (mrad)

## FIG. 20

Erreur vitesse XB (m/s)

## FIG. 21

Erreur vitesse ZB (m/s)

## FIG. 22

Déplacement ZB (m)

## FIG. 23

Biais accéléromètre Z

## FIG. 24

Biais accéléromètre X

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Applied Optimal Estimation. The Analytic Sciences Corporation, 1974

- **GAMINI DISSANAYAKE.** The Aiding of a Low-Cost Strapdown Inertial Measurement Unit Using Vehicle Model Constraints for Land Vehicle Applications. *IEEE Transactions on Robotics and Automation,* Octobre 2001, vol. 17 (5